# EUROPÄISCHE PATENTSCHRIFT

(11) **EP 2 131 056 B1**
(45) Veröffentlichungstag und Bekanntmachung des Hinweises auf die Patenterteilung: **23.02.2011**
(21) Anmeldenummer: 09159376.4
(22) Anmeldetag: 05.05.2009
(51) Int. Cl.: F16D 57/04, B60T 10/02

(54) **Hydrodynamischer Retarder mit tangentialem Zu- und Abströmprinzip**
Hydrodynamic retarder with tangental inflow and outflow principle
Retardateur hydrodynamique fonctionnant selon le principe d'arrivée et d'écoulement de flux tangentiel

(30) Priorität: 04.06.2008 DE 102008002203
(43) Veröffentlichungstag der Anmeldung: 09.12.2009
(73) Patentinhaber: ZF Friedrichshafen AG, 88038 Friedrichshafen (DE)
(72) Erfinder: Zirkl, Otwin, 88069, Tettnang (DE); Huber, Michael, 88085, Langenargen (DE); Ulmer, Andreas, 88074 Meckenbeuren (DE)

(56) Entgegenhaltungen:
- WO-A-2009/007220
- WO-A-2009/013083
- DE-A1- 2 164 067
- DE-A1- 2 346 495
- DE-B3-102005 050 219

## Beschreibung

Die vorliegende Erfindung bezieht sich auf einen hydrodynamischen Retarder mit tangentialem Zu- und Abströmprinzip gemäß dem Oberbegriff des Patentanspruchs 1.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Torusraum eingebracht, wobei der drehende Rotor das Öl mitnimmt, das sich am Stator abstützt, wodurch eine Bremswirkung auf die Rotorwelle erzeugt wird.

Bei hydrodynamischen Retardern mit tangentialem Zu- und Abströmprinzip wird das zuströmende Medium bei extremer Teilfüllung, d.h. bei einer Füllung mit einer geringen Ölmenge durch den tangentialen Auslass unmittelbar wieder entleert, ohne den hydrodynamischen Kreislauf zu schließen. Um eine geringe Änderung des Bremsmoments zu erzielen, ist in einer derartigen Situation eine große Änderung des dazugehörigen Steuerdrucks notwendig.

Nimmt der Grad der Füllung des Retarders weiter zu, so wird der hydrodynamische Kreislauf ab einem bestimmten Füllgrad geschlossen, wobei bei geschlossenem Kreislauf nur geringe Steuerdruckänderungen für große Bremsmomentänderungen erforderlich sind.

Somit entstehen bei hydrodynamischen Retardern mit tangentialem Zu- und Abströmprinzip zwei unterschiedliche Betriebsbereiche, wobei am Übergang zwischen beiden Bereichen eine Instabilität gegeben ist, was zu starken Schwankungen des Bremsmomentes führt, da in diesem Betriebspunkt ein ständiger Wechsel zwischen geschlossenem und offenem hydrodynamischen Kreislauf stattfindet.

Aus der DE 4028128 A1 der Anmelderin ist eine Vorrichtung zur Reduzierung von Leerlaufverlusten bei hydrodynamischen Bremsen bekannt, bei der zur Verringerung der Ventilationsverluste veränderliche Strömungshindernisse zwischen Rotor und Stator der Bremse angeordnet sind. Hierbei trennen ein oder mehrere im Querschnitt z. B. winkelförmige Strömungshindernisse im Leerlaufbetrieb bei ölentleerter Bremse im äußeren Bereich der Torusräume über einen nach radial innen ragenden ringförmigen Schenkel diese Räume, wobei ein in axialer Richtung zylinderförmig angeordneter Schenkel an der inneren Wand einer Kammer anliegt.

Im Bremsbetrieb steht bei der bekannten Bremse der radial nach innen ragende Schenkel mit seiner vorderen Kante hinter den Torusräumen zurück; wenn nur ein Strömungshindernis angeordnet ist, das den gesamten Umfang des äußeren Bereichs der Torusräume überdeckt, sind zur Erzielung der entsprechenden Elastizität Schlitze im radial nach innen ragenden ringförmigen Schenkel angeordnet. Die Betätigung in die radial äußere und innere Endstellung wird über eine Betätigungseinrichtung erzielt, wobei eine besonders vorteilhafte Ausgestaltung über eine Kolben-Zylinder-Einheit mit zwei Kolben und mit einer Mitnahmeeinrichtung an den Kolben und Mitnehmern an dem Strömungshindernis vorgesehen ist; hierbei wird die innere Stellung über Federn und die äußere Stellung über den Druck eines Druckmittels in einem Druckraum zwischen den beiden Kolben erzielt.

Des weiteren wird im Rahmen der noch nicht veröffentlichten DE 102007031723 der Anmelderin vorgeschlagen, am Stator des hydrodynamischen Retarders mindestens eine radiale Ausnehmung vorzusehen, welche sich radial betrachtet nach außen ausdehnt, derart, dass bei Teilfüllung eine Rückspeisung bzw. Zurückbefüllung des durch den tangentialen Auslass des Retarders austretenden Öls in den Druckraum ermöglicht wird, wobei die Tiefe und Breite bzw. Ausdehnung der zumindest einen radialen Ausnehmung variabel gestaltbar sein kann.

Durch die Rückspeisung bzw. Zurückbefüllung des durch den tangentialen Auslass des Retarders austretenden Öls in den Druckraum wird auch bei extremer Teilfüllung der hydrodynamische Kreislauf geschlossen.

Aus der DE 102005050219 B3 ist eine hydrodynamische Maschine, insbesondere eine hydrodynamische Kupplung oder ein hydrodynamischer Wandler bekannt, mit einem mit Arbeitsmedium befüllbaren Arbeitsraum, einer Eingangswelle, einem im Arbeitsraum angeordneten, beschaufelten Primärrad, das in einer Triebverbindung mit der Eingangswelle steht oder schaltbar ist und mit Arbeitsmedium beaufschlagbar ist sowie mit einem im Arbeitsraum angeordneten, beschaufelten Sekundärrad, welches derart mit Arbeitsmedium beaufschlagbar und gegenüber dem Primärrad positionierbar ist, dass mittels eines Strömungskreislaufes des Arbeitsmediums im Arbeitsraum ein Drehmoment von dem Primärrad auf das Sekundärrad übertragen wird. Hierbei ist die Größe des maximal übertragbaren Drehmoments von der Drehzahl der Eingangswelle sowie dem Füllungsgrad des Arbeitsraumes mit Arbeitsmedium abhängig. Gemäß der DE 102005050219 B3 ist die hydrodynamische Maschine derart eingerichtet, dass der Betrag des maximal übertragbaren Drehmoments, umfassend sowohl ein positives Drehmoment als auch ein negatives Drehmoment, von dem Primärrad auf das Sekundärrad unabhängig von einer Änderung der Drehzahl der Eingangswelle periodisch veränderbar ist.

Dies wird dadurch erreicht, dass die zwischen dem Primärrad und dem Sekundärrad angeordneten Leitschaufeln hinsichtlich ihrer Position relativ zu den Schaufeln des Primärrads und des Sekundärrads periodisch verstellbar sind. Ferner kann vorgesehen sein, dass die Schaufeln vom Primärrad und/oder Sekundärrad in ihrem Winkel gegenüber einer zur Drehachse oder Symmetrieachse achssenkrechten Ebene durch den Arbeitsraum periodisch verstellbar sind. Zudem wird vorgeschlagen, dass das Primärrad und/oder das Sekundärrad axial verschiebbar gelagert ist und dass der axiale Abstand zwischen dem Primärrad und dem Sekundärrad periodisch geändert wird. Es ist gemäß der DE 102005050219 B3 auch möglich, dass das Primärrad und/oder das Sekundärrad periodisch taumelnd oder exzentrisch auf einer Drehachse gelagert ist.

Der vorliegenden Erfindung liegt die Aufgabe zugrunde, einen hydrodynamischen Retarder mit tangentialem Zu- und Abströmprinzip anzugeben, bei dem die Instabilität zwischen den beiden Betriebsbereichen bei Teilfüllung des Retarders weitgehend vermieden wird.

Diese Aufgabe wird durch die Merkmale des Patentanspruchs 1 gelöst. Weitere erfindungsgemäße Ausgestaltungen und Vorteile gehen aus den Unteransprüchen hervor.

Gemäß einer ersten Ausführungsform der Erfindung sind die Drehachse des Rotors und die Achse des Stators nicht koaxial sondern in einem bestimmten Winkel zueinander angeordnet. Dadurch wird ein variabler Austrittsspalt und somit ein kontinuierlicher Übergang zwischen den beiden Betriebsbereichen geschaffen.

Gemäß einer weiteren Ausführungsform gemäß der Erfindung weist der Rotor und/oder der Stator des Retarders eine unebene Stirnfläche auf, was in vorteilhafter Weise zu einem variablen Öleintritt und/oder Ölaustritt und somit zu unterschiedlichen kontinuierlich ineinander übergehenden Betriebsbereichen führt.

Besonders vorteilhaft ist es, wenn der Retarder anstelle des aus dem Stand der Technik bekannten runden Torusquerschnitts einen nicht runden Torusquerschnitt, beispielsweise einen elliptischen Torusquerschnitt aufweist. Diese Ausgestaltung führt ebenfalls dazu, dass ein kontinuierlicher Übergang zwischen den Betriebsbereichen bei Teilfüllung des Retarders erzeugt wird.

Selbstverständlich können die oben beschriebenen Ausgestaltungen beliebig miteinander kombiniert werden, um ein optimales Ergebnis zu erzielen.

Die Erfindung wird im folgenden anhand der beigefügten Figuren beispielhaft näher erläutert.
Es zeigen:
- Fig. 1: eine schematische Ansicht;
- Fig. 2: eine schematische Ansicht einer ersten Ausführungsform der Erfindung;
- Fig. 3: eine schematische Seitenansicht einer weiteren Ausführungsform eines hydrodynamischen Retarders und
- Fig. 4: eine schematische Ansicht einer weiteren Ausführungsform eines hydrodynamischen Retarders.

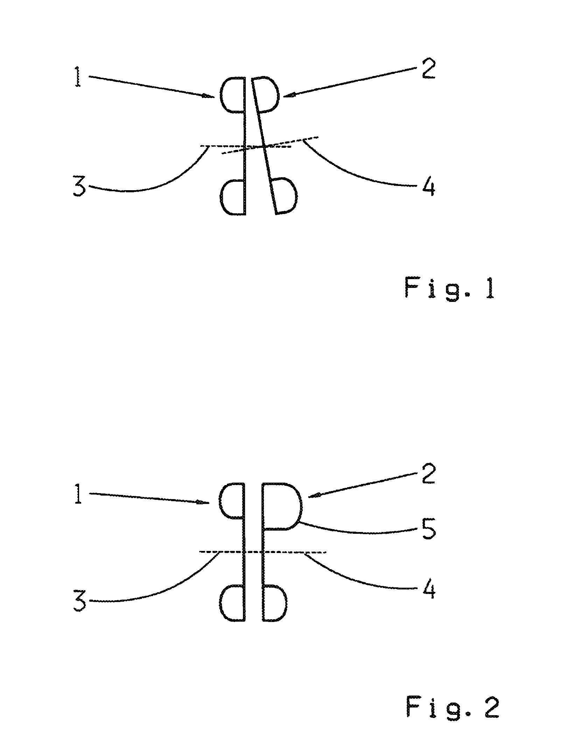

In Fig. 1 sind ein Rotor 1 und ein Stator 2 eines hydrodynamischen Retarders mit tangentialem Zu- und Abströmprinzip dargestellt, wobei die Drehachse 3 des Rotors 1 und die Achse 4 des Stators 2 in einem bestimmten Winkel zueinander angeordnet sind, so dass ein variabler Austrittsspalt und somit ein kontinuierlicher Übergang zwischen den beiden Betriebsbereichen geschaffen wird.

Gemäß der Erfindung und bezugnehmend auf Fig. 2 weist der Stator 2 des Retarders einen Torus 5 mit einem variablen Torusdurchmesser auf; dadurch werden bei Teilfüllung in den Schaufelzwischenräumen unterschiedliche Füllungsgrade erreicht und unterschiedliche kontinuierlich ineinander übergehende Betriebsbereiche der einzelnen Schaufelzwischenräume erzeugt.

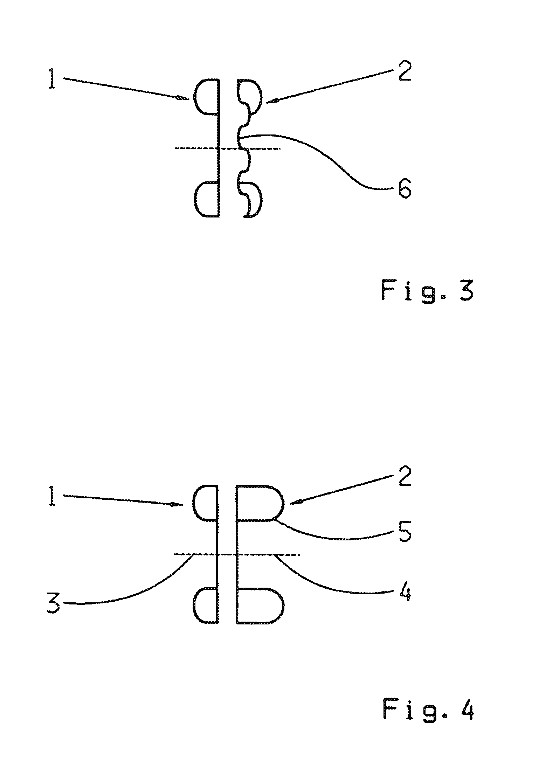

Bei dem in Fig. 3 gezeigten Beispiel weist der Stator 2 des Retarders eine unebene, vorzugsweise gewellt ausgeführte Stirnfläche 6 auf, was zu einem variablen Öleintritt und/oder Ölaustritt und folglich zu unterschiedlichen kontinuierlich ineinander übergehenden Betriebsbereichen bei Teilfüllung führt, wodurch die eine Instabilität am Übergang zwischen dem Betriebsbereich mit geschlossenem und dem Betriebsbereich mit offenem hydrodynamischen Kreislauf verhindert wird.

Gegenstand der Fig. 4 ist ein weiteres Ausführungsbeispiel, bei dem der Retarder einen nicht runden Torusquerschnitt aufweist; durch diese Konzeption wird ein kontinuierlicher Übergang zwischen dem Betriebsbereich mit geschlossenem und dem Betriebsbereich mit offenem hydrodynamischen Kreislauf bei Teilfüllung des Retarders geschaffen; vorzugsweise ist der Torusquerschnitt elliptisch oder ellipsenähnlich.

### Bezugszeichen

- 1: Rotor
- 2: Stator
- 3: Drehachse des Rotors
- 4: Achse des Stators
- 5: Torus
- 6: Stirnfläche des Stators

## Patentansprüche

1. Hydrodynamischer Retarder mit tangentialem Zu- und Abströmprinzip, **dadurch gekennzeichnet, dass** der Rotor (1) und/oder der Stator (2) des Retarders einen Torus (5) mit einem variablen Torusdurchmesser aufweist, wodurch bei Teilfüllung des Retarders in den Schaufelzwischenräumen unterschiedliche Füllungsgrade erreicht und unterschiedliche kontinuierlich ineinander übergehende Betriebsbereiche der einzelnen Schaufelzwischenräume erzeugt werden zwischen dem Betriebsbereich mit geschlossenem und dem Betriebsbereich mit offenem hydrodynamischen Kreislauf, wodurch eine Instabilität am Übergang zwischen den Betriebsbereichen verhindert wird

2. Hydrodynamischer Retarder mit tangentialem Zu- und Abströmprinzip, nach Anspruch 1, **dadurch gekennzeichnet, dass** die Drehachse (3) des Rotors (1) und die Achse (4) des Stators (2) des Retarders in einem bestimmten Winkel zueinander angeordnet sind, so dass ein variabler Austrittsspalt und somit ein kontinuierlicher Übergang zwischen den beiden Betriebsbereichen geschaffen wird.

3. Hydrodynamischer Retarder mit tangentialem Zu- und Abströmprinzip, nach Anspruch 1, oder 2, **dadurch gekennzeichnet, dass** der Rotor (1) und/oder der Stator (2) des Retarders eine unebene Stirnfläche (6) aufweist, wodurch ein variabler Öleintritt und/oder Ölaustritt und unterschiedliche kontinuierlich ineinander übergehende Betriebsbereiche erzielbar sind.

4. Hydrodynamischer Retarder mit tangentialem Zu- und Abströmprinzip, nach Anspruch 3, **dadurch gekennzeichnet, dass** die Stirnfläche des Rotors (1) und/oder des Stators (2) gewellt ausgeführt ist.

5. Hydrodynamischer Retarder mit tangentialem Zu- und Abströmprinzip, nach einem der vorangehenden Ansprüche, **dadurch gekennzeichnet, dass** er einen nicht runden Torusquerschnitt aufweist.

6. Hydrodynamischer Retarder mit tangentialem Zu- und Abströmprinzip, nach Anspruch 5 **dadurch gekennzeichnet, dass** der Torusquerschnitt elliptisch oder ellipsenähnlich ausgeführt ist.

## Claims

1. Hydrodynamic retarder with tangential inflow and outflow principle, **characterized in that** the rotor (1) and/or the stator (2) of the retarder have/has a torus (5) with a variable torus diameter, as a result of which, when the retarder is partially filled, different filling levels are obtained in the blade intermediate spaces, and different operating ranges, which merge continuously into one another, of the individual blade intermediate spaces are generated between the operating range with a closed hydrodynamic circuit and the operating range with an open hydrodynamic circuit, as a result of which an instability at the transition between the operating ranges is prevented.

2. Hydrodynamic retarder with tangential inflow and outflow principle, according to Claim 1, **characterized in that** the axis of rotation (3) of the rotor (1) and the axis (4) of the stator (2) of the retarder are arranged at a certain angle relative to one another, such that a variable outlet gap and therefore a continuous transition between the two operating ranges is provided.

3. Hydrodynamic retarder with tangential inflow and outflow principle, according to Claim 1 or 2, **characterized in that** the rotor (1) and/or the stator (2) of the retarder has an uneven end surface (6), as a result of which it is possible to obtain a variable oil inlet and/or oil outlet and different operating ranges which merge continuously into one another.

4. Hydrodynamic retarder with tangential inflow and outflow principle, according to Claim 3, **characterized in that** the end surface of the rotor (1) and/or of the stator (2) is of corrugated design.

5. Hydrodynamic retarder with tangential inflow and outflow principle, according to one of the preceding claims, **characterized in that** it has a non-circular torus cross section.

6. Hydrodynamic retarder with tangential inflow and outflow principle, according to Claim 5, **characterized in that** the torus cross section is elliptical or approximately elliptical.

## Revendications

1. Retardateur hydrodynamique fonctionnant selon le principe d'arrivée et d'écoulement de flux tangentiel, **caractérisé en ce que** le rotor (1) et/ou le stator (2) du retardateur présente un tore (5) de diamètre de tore variable, de sorte que lors du remplissage partiel du retardateur, différents degrés de remplissage soient obtenus dans les espaces entre les aubes et que différentes zones de fonctionnement se prolongeant en continu les unes dans les autres, des espaces individuels entre les aubes, soient produites entre la zone de fonctionnement à circuit fermé et la zone de fonctionnement à circuit hydrodynamique ouvert, de sorte qu'une instabilité au niveau de la transition entre les zones de fonctionnement soit exclue.

2. Retardateur hydrodynamique fonctionnant selon le principe d'arrivée et d'écoulement de flux tangentiel selon la revendication 1, **caractérisé en ce que** l'axe de rotation (3) du rotor (1) et l'axe (4) du stator (2) du retardateur sont disposés suivant un certain angle l'un par rapport à l'autre, de sorte qu'une fente de sortie variable et donc une transition continue entre les deux zones de fonctionnement soit réalisée.

3. Retardateur hydrodynamique fonctionnant selon le principe d'arrivée et d'écoulement de flux tangentiel selon la revendication 1 ou 2, **caractérisé en ce que** le rotor (1) et/ou le stator (2) du retardateur présente une surface frontale inégale (6), de sorte qu'une entrée d'huile variable et/ou une sortie d'huile variable et différentes zones de fonctionnement se prolongeant en continu les unes dans les autres puissent être obtenues.

4. Retardateur hydrodynamique fonctionnant selon le principe d'arrivée et d'écoulement de flux tangentiel selon la revendication 3, **caractérisé en ce que** la surface frontale du rotor (1) et/ou du stator (2) est réalisée de manière ondulée.

5. Retardateur hydrodynamique fonctionnant selon le principe d'arrivée et d'écoulement de flux tangentiel selon l'une quelconque des revendications précédentes, **caractérisé en ce qu'**il présente une section de tore non circulaire.

6. Retardateur hydrodynamique fonctionnant selon le principe d'arrivée et d'écoulement de flux tangentiel selon la revendication 5, **caractérisé en ce que** la section transversale de tore est réalisée sous forme d'ellipse ou d'ellipsoïde.
